# EUROPEAN PATENT SPECIFICATION

(11) **EP 2 247 873 B1**
(45) Date of publication and mention of the grant of the patent: **07.12.2011**
(21) Application number: 08806503.2
(22) Date of filing: 01.10.2008
(51) Int. Cl.: F16H 57/08, F03D 11/02, F16H 57/02, F16H 37/04, F16H 1/28, F16H 1/46

(54) **A TRANSMISSION SYSTEM FOR POWER GENERATION**
ÜBERTRAGUNGSSYSTEM FÜR ENERGIEERZEUGUNG
SYSTÈME DE TRANSMISSION POUR GÉNÉRATION D'ÉNERGIE

(30) Priority: 01.10.2007 GB 0719119
(43) Date of publication of application: 10.11.2010
(73) Proprietor: Orbital2 Limited, Chipping Campden, Gloucestershire GL55 6BJ (GB)
(72) Inventor: HICKS, Raymond, John, Powys LD4 4BS (GB); CUNLIFFE, Franck, Gloucestershire GL55 6BJ (GB)
(74) Representative: Dunlop, Brian Kenneth Charles
(86) International application number: PCT/GB2008/003358
(87) International publication number: WO 2009/044159

(56) References cited:
- DE-A1- 2 937 845
- "Zahnradgetriebe" MAAG TASCHENBUCH,, 1 October 1985 (1985-10-01), pages 234-237, XP007904949

## Description

The present invention relates to a transmission system, particularly, but not exclusively, for driving a generator or the like by means of a fluid driven rotary prime mover such as a wind or tidal power turbine. DE2937845A1 discloses a transmission according to the preamble of claim 1,

It is generally accepted that large turbines, for example wind turbines producing electricity for feeding to a grid system, require a large and heavy supporting structure because they are subjected to large forces, which act in many directions. A conventional answer to accommodating these large forces is to make a turbine carrier casing which is very strong and rigid. Since large turbines rotate relatively slowly, they have very high torque and it is usual to increase their slow speed by using step-up gearing as part of the turbine carrier, to produce a more useful rotary speed.

In order to avoid misalignment of the gears used, the turbine carrier, in which the gearing is supported has to made even more rigid so that it does not distort, not only under the influence of the varied turbine forces but also under the influence of internal torques within the gearing. Speed reducing geared transmissions for transmitting large torques to slow moving heavy machinery are known commercially, but such transmissions do not address the problems mentioned above. The inventors have realised that an improved design of turbine transmission will address at least the problems mentioned above.

These problems are solved by the invention according to claim 1. The dependent claims concern particular embodiments of that invention,

The claimed invention can be put into practice in numerous ways, Two illustrative embodiments of the invention are described below by way of example, with reference to the drawings, wherein:
Figure 1 shows a simplified schematic representation of a transmission mounted to a wind turbine carrier;
Figure 2 shows a section through a transmission designed in accordance with the schematic representation shown in Figure 1;
Figure 3 shows a pictorial view of a part of the transmission shown in Figure 2 together with a support;
Figures 4a and 4b show two different pictorial views of parts shown in Figures 2 and 3, as part of a turbine carrier assembly:
Figure 5 shows the power paths of the transmission shown in Figure 2.
Figures 6 to 10 show a second version of a wind turbine transmission which is similar to the transmission shown in Figures 1 to 5 respectively,

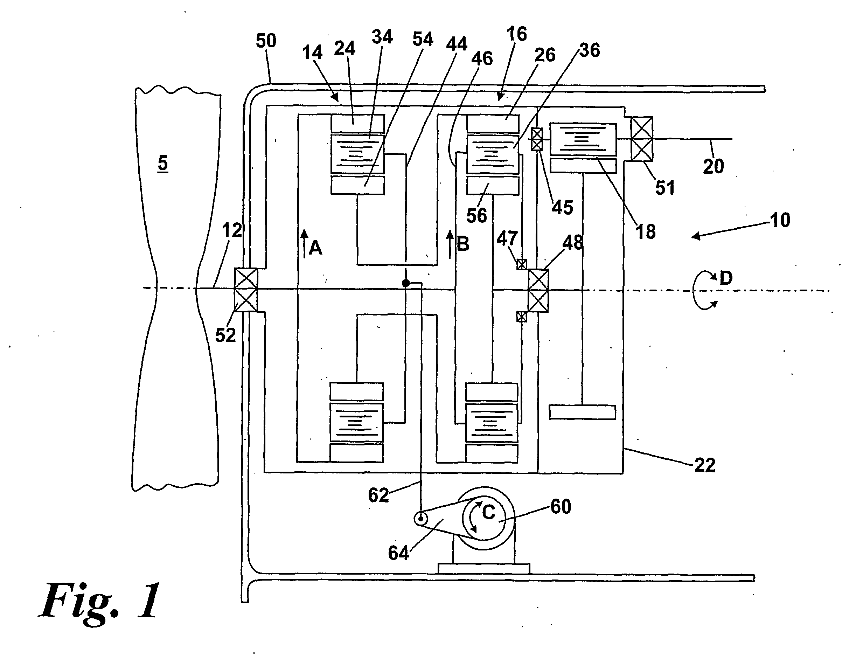

Figure 1 shows a transmission 10 which provides a step-up rotary drive for a wind turbine 5 to an output 20. Typically a 1:15 step-up ratio will be required but higher or lower ratios are possible, The transmission 10 has an input shaft 12 which feeds two epicyclic gear trains 14 and 16, which split power from the input along two paths A and B. The turbine 5 and the transmission 10 are supported by a turbine carrier 50.

In path A power is supplied to an annulus 24 of the train 14. The annulus 24 drives a star train 34 i,e. a set of planet gears whose centres of rotation are fixed by a generally static member in the form of planet carrier 44. The rotatable planet gears 34 in turn drive a sun gear 54.

In path B power from the input is supplied to planet carrier 46, The power from train 14 is also supplied to the annulus 26 of the train 16. Thus, both power paths A and B are combined to drive sun gear 56. In turn, sun gear 56 drives output 20 via an additional pinion gear pair 18.

The transmission has bearings 45,47, 48, 51 and 52 which support the weight of the transmission 10 and keep the relative alignment of the gears in the transmission 10. The transmission 10 has a cover 22 which is not subjected to torque loadings. The transmission 10 is arranged such that a torque reaction to stop the whole transmission spinning is required only at planet carrier 44. This reaction is resilient so the whole transmission can twist relative to the turbine carrier 50 and any sudden torque increases can be smoothed by the twisting of the carrier 44.

The support for the planet carrier 44 is provided by a torsion member which in this instance is a tube 60, mounted to the turbine carrier 50 and is capable of twisting about its axis C and thereby allowing the planet carrier 44 to twist about its axis of rotation D, when the planet carrier 44 forces a tie rod 62 and torsion arm 64 to twist the torsion member 60.

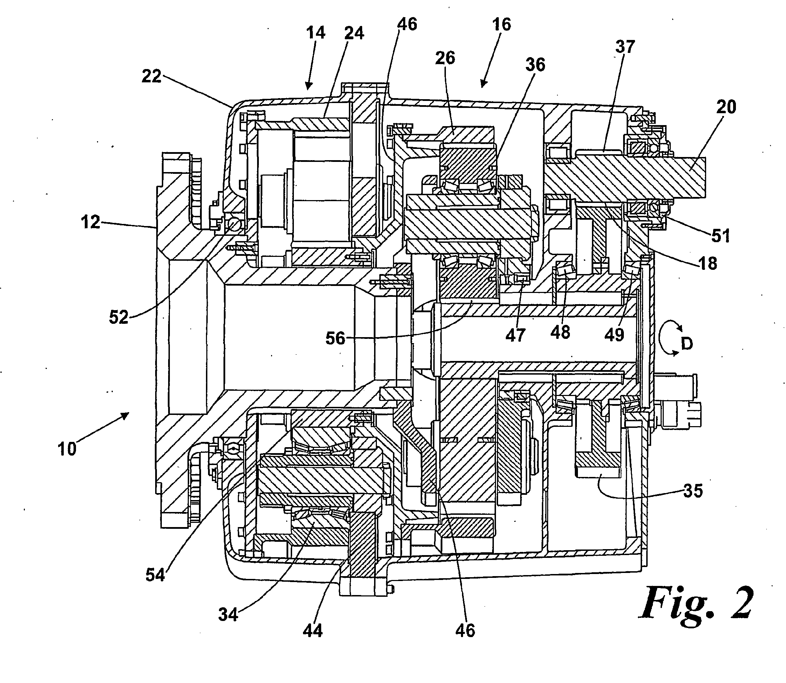

Figure 2 shows a more detailed view of the transmission 10 shown in Figure 1. Like numbering in Figures 1 and 2 show like parts. It will be noted that the planet carrier 44 is mounted directly to the cover 22, but that the cover is not subjected significant torque, even though it carries the weight of the transmission 10.

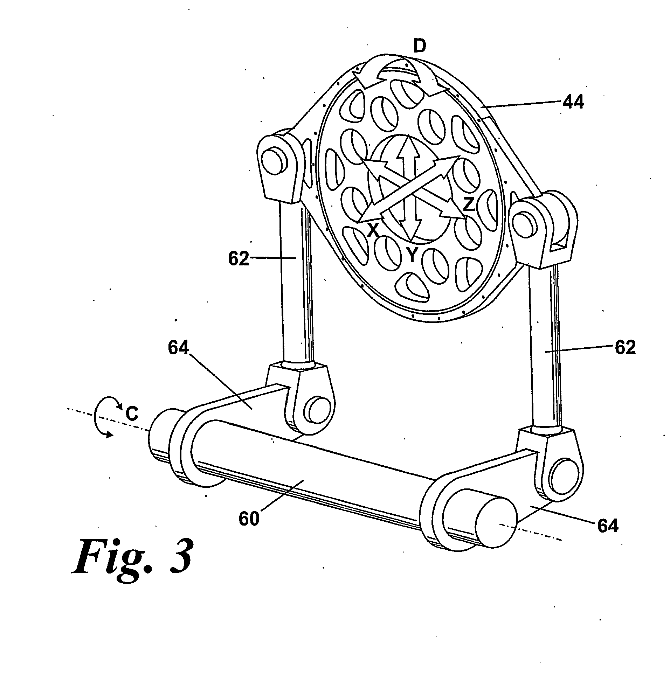

Figure 3 shows planet carrier 44 shown in Figure 2, without the other transmission parts, together with the torsion tube 60 the torsion arms 64 and tie 25.03.2011 17:10:36 rods 62. In use, the planet carrier is able to rotate to a limited degree about axis D. Additionally some compliant movement is possible in the X Y and Z linear directions. The torsion tube 60 is forced to twist about its axis C by the torque forces exerted on the planet carrier 44, transmitted to the torsion tube by means of the tie rods 62 and torsion arms 64.

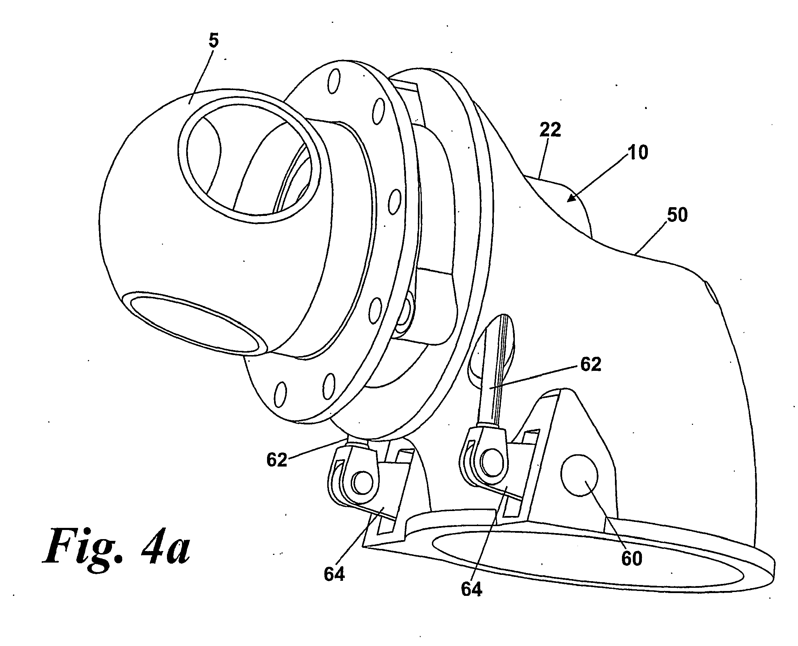

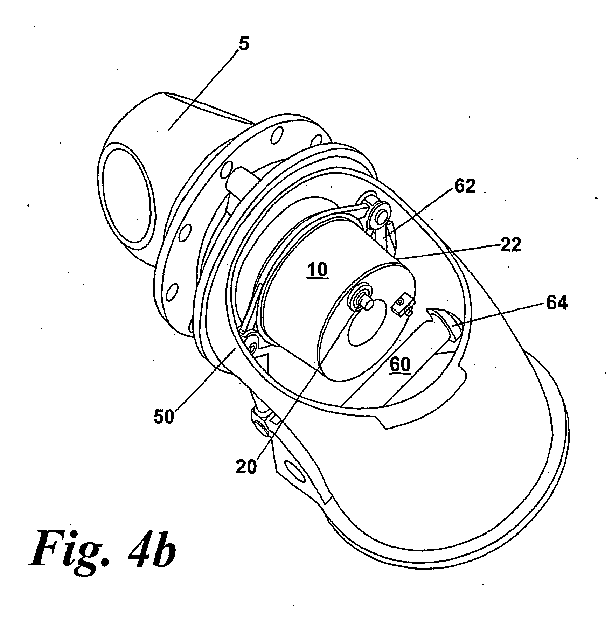

Figure 4a shows the turbine carrier 50 assembled together with the torsion tube 60 and the transmission 10 connected to the torsion tube 60 by the tie rods 62 and torsion arms 64. Torsion tube 60 is mounted to the turbine carrier 50 so that it can rotate about its axis C, In use, torque on the carrier 44 induces upward forces in one tie rod and downward forces in the other, These tie rod forces cause torsion in the tube 60. In practice, this torsion reacts against torsion exerted on the planet carrier 44 in the transmission 10 so that only limited resilient rotation of the planet carrier is possible.

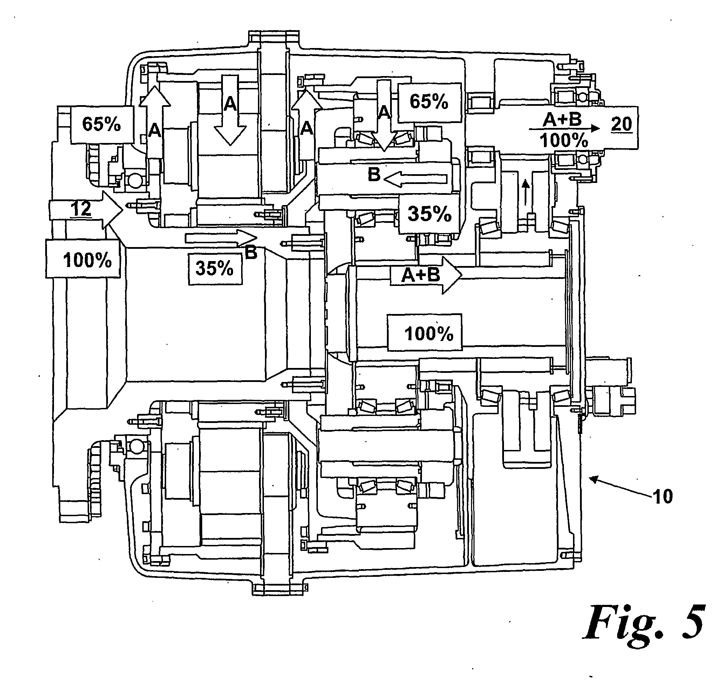

Figure 5 shows a further view of the transmission 10 illustrating the percentage of power travelling through paths A and B In this instance, as a result of the arrangement of the gears and the number of teeth for the gears, approximately two-thirds (65%) of power travels through path A and approximately one-third (35%) travels through path B. Paths A and B are combined at the output.

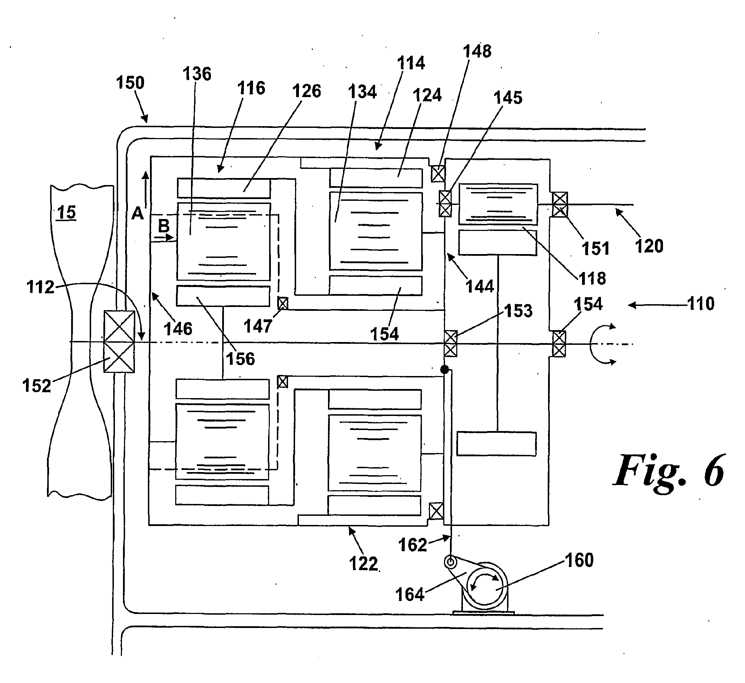

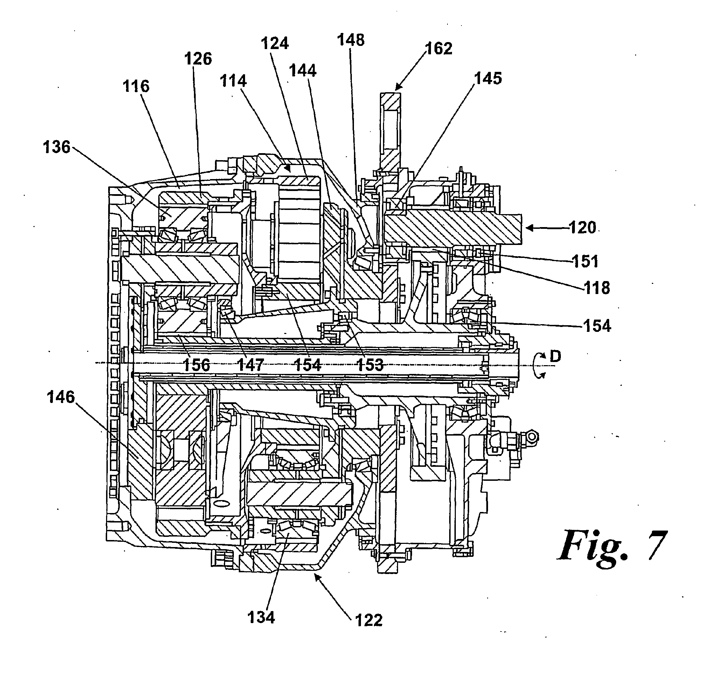

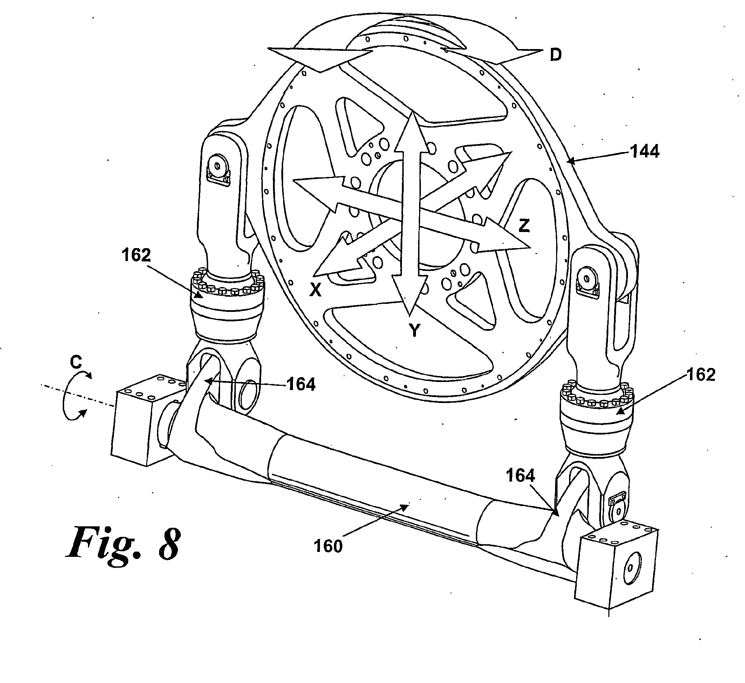

Figures 6 to 10 correspond respectively with Figures 1 to 5 and like parts have like reference numerals, with the additional prefix '1', for example the turbine input shaft is referred to as shaft 12 in Figures 1 to 5 and as shaft 112 in Figures 6 to 10.

Reference can be made to the corresponding Figures 1 to 5 to provide a description of the operation of the transmission shown in Figures 6 to 10., although differences in the transmissions 10 and 110 are described below.

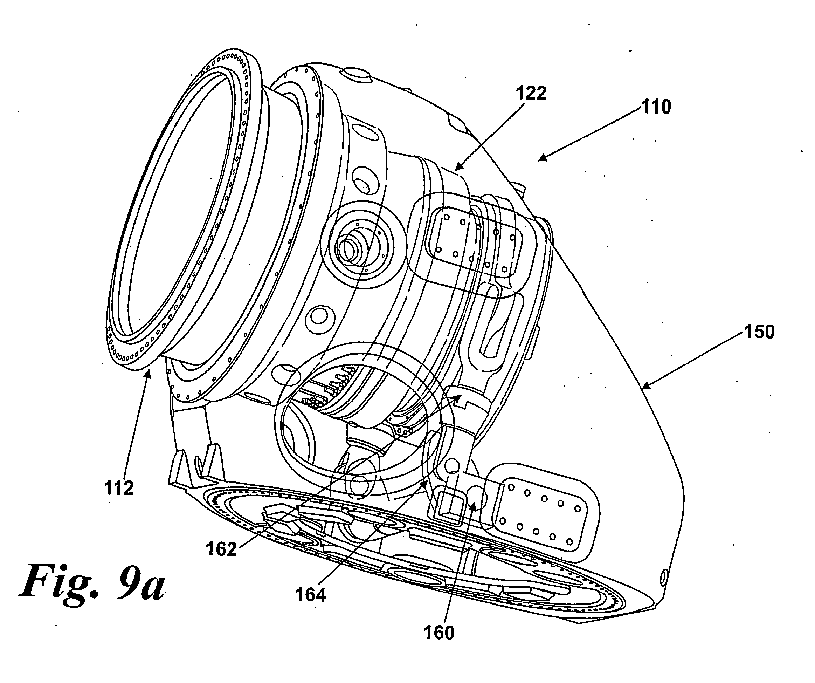

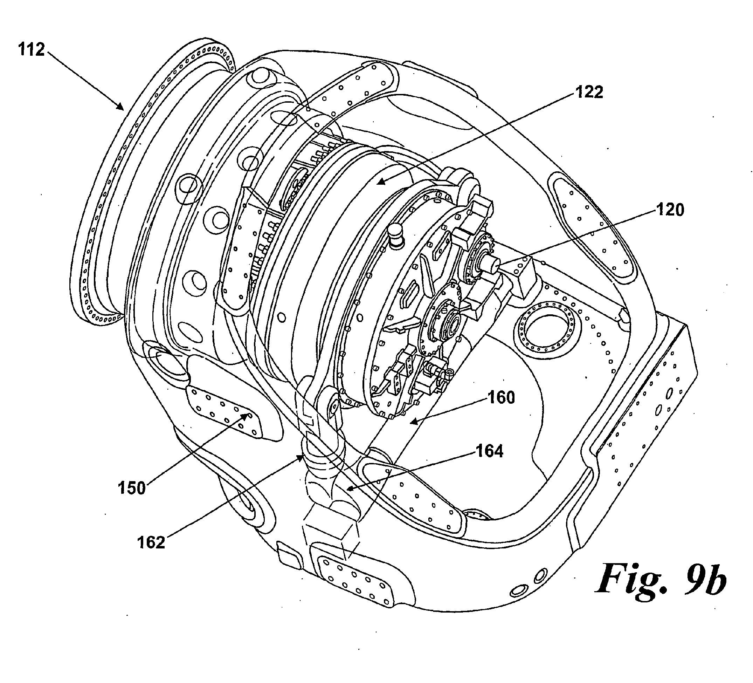

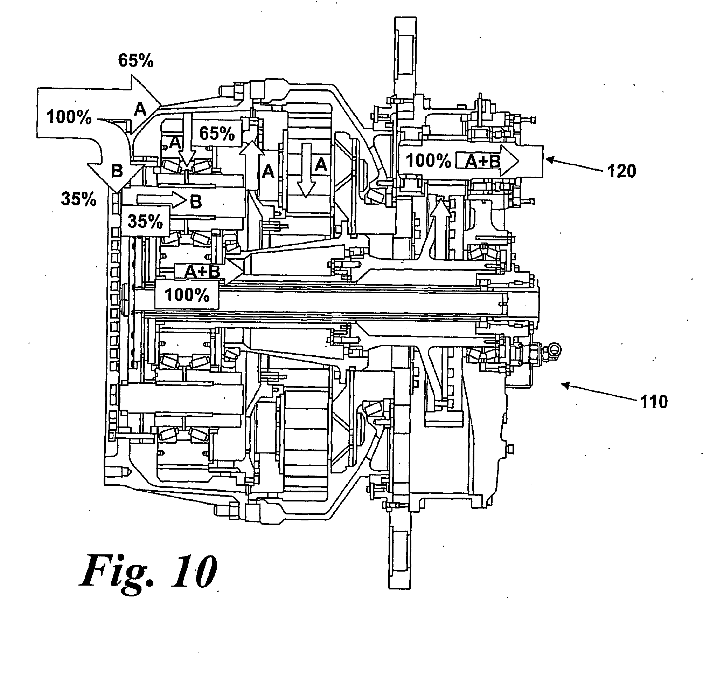

In transmission 10 described above, the epicyclic gear train 16 which contains star train 34 and planet carrier 44, is further away from the input 12 than the gear train 14. Conversely, in the transmission 110 the gear trains 114 and 116 which correspond with gears trains 14 and 16, are reversed so that gear train 116 is now closer to the input 112 than the gear train 114. The principles of operation of transmission 110 are otherwise the same as transmission 10, except that planet carrier is further from the input. It will be noted that the cover 122 rotates because it forms part of the gear train. The cover 122 merely transmits torque and carries the weight but is not subjected to external forces. The same split in power is provided between power paths A and B, and this is quantified and illustrated in Figure 10. In Figures 9a and 9b the turbine support 150 is shown so that the parts within the support are viewable in the drawings, although in practice the support 150 will be a metal casting which is opaque.

The transmissions illustrated and described above have the advantage that the gearbox casing 22/122 and hence the gears of the gearbox are be generally mechanically isolated from the surrounding structure, in this case the wind turbine carrier 50/150, and so any flexing of the turbine carrier is not translated into gear misalignment or gear stress. This prolongs the life of the gears and increases efficiency.

The transmissions 10/110 are arranged such that, other than being supported such that the transmission gears stay in contact with each and such that their weight is supported, only one static element 44/144 of the gear train is restrained in one degree of freedom, relative to the turbine carrier 50/150. That degree of freedom is rotation, in this case rotation about the input axis. The restraint in this case is resilient such that resilient rotational freedom is applied, allowing limited rotation which is urged back to an initial starting position. The static element 44/144 is not restrained against movement in any other sense relative to the turbine carrier 50/150 by the resilient rotational restraint, i.e. no restraint in the three linear degrees of freedom is imparted by parts 62/162,64/164 or 60/160, and there is no restraint in the other two rotational degrees of freedom. Consequently the transmission 10/110 has no external stresses imparted to it during operation other than those reacting against the static element's 44/144 urge to rotate. This in turn provides a transmission that does not need to have a significantly rigid casing and has lower operating stresses. The output 20/120 may be connected to a generator or the like by a flexible coupling so that no stress is imparted into the transmission 10/110 if the transmission moves slightly in rotation.

Whilst only two embodiments of the invention have been described and illustrated, it will be apparent that various modifications, alternatives, adaptations etc are possible within the ambit of the invention as claimed. One example of a torsion tube 60/160 and tie rods 62/162 have been described and illustrated, but other torsion resisting members could be used, for example one tie rod could be used to twist a torsion tube, the tube having one end secured to the turbine carrier, or a simple cantilever could be used to resist rotation or an elastomeric torque reaction member could connected between the static member of the transmission 10/110 and the turbine carrier 501150.

## Claims

1. A transmission (10) for use in generating power from a fluid driven turbine, the transmission (10) including an input (12) and an output (20) and a gear train (14,16) between the input and the output for increasing the rotational speed of the output relative to the input, the gear train (14,16) including a plurality of gears (24, 34, 54, 26, 36, 56) for transmitting torque from the input (12) to the output (20), the transmission including also a generally static member (44) engaged with one or more gears of said gear train between the input and the output for providing a single resilient gear train torque reaction, wherein the transmission further includes a resilient support (60,62,64) for the static member (44) for providing limited resilient rotation of said static member (44) about a static member axis, **characterized in that** the resilient support includes an elongate torsion member (60) for resilient twisting about a torsion axis.

2. A transmission according to claim 1 wherein the input (12) is rotatable about an input axis, the static member axis and input axis being substantially coaxial.

3. A transmission according to claim 1 or 2 wherein the torsion member (60) has two ends and a first arm (64) secured to, and adjacent, one end of the torsion member (60), the first arm (64) extending generally radially away from the torsion axis and wherein the transmission further includes a first tie (62), coupling the static member (44) at a first region spaced from the member axis, to the first arm (64), for transmitting the torque reaction between the static member (44) and the torsion member (60) for causing said twisting of said torsion member (60).

4. A transmission according to claim 3 wherein a second arm (64) is provided adjacent the other end of the torsion member (60), and a second tie (62) is provided coupling the static member (44), at a second region spaced from the member axis and opposite the first region, to the second arm for transmitting also torque to the torsion member in an opposite sense to the torque transmitted by the first tie.

5. A transmission according to claim 3 or 4 wherein the torsion axis is substantially perpendicular to, but spaced from, the static member axis.

6. A transmission according to any one of the preceding claims wherein the transmission includes a cover (22) which is attached to the static member (44) and supports at least a portion of the weight of the transmission (10).

7. A transmission according to any one of the preceding claims wherein the gear train includes at least a first epicyclic gear train (14) forming a first torque path and having a first annulus (24), first planet gears (34) and a first sun gear (54) and the generally static member (44) includes a carrier of the first planet gears (34).

8. A transmission according to claim 7 wherein the first annulus (24) is connected directly to the input (12), for driving the first planet gears (24) and the first planet gears (24) are arranged to drive the first sun gear (54).

9. A transmission according to claim 7 or 8 wherein the gear train includes a second epicyclic gear train (16) combining the power from the first torque path and from a second torque path, the first and second paths sharing torque from the input, only the first gear train (14) having the generally static member (44).

10. A transmission according to claim 9 wherein the second epicyclic gear train (16) has a second annulus (26), second planetary gears (36) and a second sun gear, the first sun gear (54) in use driving the second annulus (26), and the second planetary gears (36) being driven in use by the input (12).

11. A transmission according to claim 9 or 10 wherein the first epicyclic gear train (14) is arranged to transmit approximately two thirds of the power delivered to the input and the second epicyclic gear train (16) is arranged to combine the two thirds of the power from the first gear train (14) with the remaining third of the input power.

## Patentansprüche

1. Übertragungs-Einrichtung (10) zur Energieerzeugung von einer flüssigkeitsgetriebenen Turbine, mit einem Antrieb (12) und einem Abtrieb (20) sowie einem Zahnrad-Getriebe (14, 16) zwischen dem Antrieb und dem Abtrieb zur Vergrößerung der Drehzahl des Antriebs in Bezug auf den Antrieb, wobei das Zahnrad-Getriebe (14, 16) mehrere Zahnräder (24, 34, 54, 26, 36, 56) zur Übertragung der Drehkraft von dem Antrieb (12) zu dem Abtrieb (20) aufweist, die Übertragungs-Einrichtung des weiteren auch einen im allgemeinen statischen Körper (44) besitzt, der mit einem oder mehreren Zahnrädern des Zahnrad-Getriebes zwischen dem Antrieb und dem Abtrieb in Eingriff steht, um eine einzelne, federnde Zahnrad-Getriebe-Drehkraftreaktion zu erzeugen, wobei die Übertragungs-Einrichtung des weiteren mit einem federnden Träger (60, 62, 64) für den statischen Körper (44) versehen ist, um eine begrenzte federnde Drehbewegung des statischen Körpers (44) um eine statische Körperachse zu bewirken, **dadurch gekennzeichnet, daß** der federnde Träger einen länglichen Torsionskörper (60) zur federnden Verwindung um eine Torsionsachse bildet.

2. Übertragungs-Einrichtung nach Anspruch 1, **dadurch gekennzeichnet, daß** der Antrieb (12) um eine Antriebsachse drehbar ist, und daß die statische Körperachse und die Antriebsachse im wesentlichen koaxial sind.

3. Übertragungs-Einrichtung nach Anspruch 1 oder 2, **dadurch gekennzeichnet, daß** der Torsionskörper (60) zwei Enden hat und einen ersten an ihm befestigten Arm (64), der neben dem einen Ende des Torsionskörpers (60) liegt, wobei sich der erste Arm (64) im allgemeinen radial von der Torsionsachse weg erstreckt und die Übertragungs-Einrichtung ferner einen ersten Anker (62) aufweist, der den statischen Körper (44) in einem ersten Bereich, welcher von der Körperachse beabstandet ist, mit dem ersten Arm (64) koppelt, um die Drehkraftreaktion zwischen dem statischen Körper (44) und dem Torsionskörper (60) zu übertragen und dadurch die Verwindung des Torsionskörpers (60) zu bewirken.

4. Übertragungs-Einrichtung nach Anspruch 3, **dadurch gekennzeichnet, daß** ein zweiter Arm (64) neben dem anderen Ende des Torsionskörpers (60) vorgesehen ist sowie ein zweiter Anker (62) vorgesehen ist, der an einem zweiten Bereich, welcher von der Körperachse beabstandet ist und dem ersten Bereich gegenüberliegt, den statischen Körper (44) mit dem zweiten Arm koppelt, um Drehkraft auf den Torsionskörpers zu übertragen, und zwar in einem entgegengesetzten Sinn zu der durch den ersten Anker übertragenen Drehkraft.

5. Übertragungs-Einrichtung nach Anspruch 3 oder 4, **dadurch gekennzeichnet, daß** die Torsionsachse im wesentlichen lotrecht zu der statischen Körperachse verläuft, jedoch von dieser abstandet ist.

6. Übertragungs-Einrichtung nach einem der vorhergehenden Ansprüche, **dadurch gekennzeichnet, daß** die Übertragungs-Einrichtung einen Deckel (22) aufweist, der an dem statischen Körper (44) angebracht ist und wenigstens einen Teil des Gewichtes der Übertragungs-Einrichtung (10) trägt.

7. Übertragungs-Einrichtung nach einem der vorhergehenden Ansprüche, **dadurch gekennzeichnet, daß** das Zahnrad-Getriebe wenigstens ein erstes epizyklisches Getriebe (14) aufweist, das einen ersten Drehkraftpfad bildet und einen ersten Ring (24), erste Planetenzahnräder (34) und ein ersten Sonnenzahnrad (54) besitzt, und daß der im allgemeinen statische Körper (44) mit einem Träger für die ersten Planetenzahnräder (34) versehen ist.

8. Übertragungs-Einrichtung nach Anspruch 7, **dadurch gekennzeichnet, daß** der erste Ring (24) direkt mit dem Antrieb (12) verbunden ist, um die ersten Planetenzahnräder (24) anzutreiben, und daß die ersten Planetenzahnräder (24) so angeordnet sind, daß sie das erste Sonnenzahnrad (54) antreiben.

9. Übertragungs-Einrichtung nach Anspruch 7 oder 8, **dadurch gekennzeichnet, daß** das Zahnrad-Getriebe ein zweites epizyklisches Getriebe (16) aufweist, das die von dem ersten Drehkraftpfad und von einem zweiten Drehkraftpfad gelieferte Energie kombiniert, wobei der erste und der zweite Pfad die von dem Antrieb gelieferte Drehkraft aufteilen, wobei nur das erste Zahnrad-Getriebe (14) den im allgemeinen statischen Körper (44) aufweist.

10. Übertragungs-Einrichtung nach Anspruch 9, **dadurch gekennzeichnet, daß** das zweite epizyklische Zahnrad-Getriebe (16) einen zweiten Ring (26), zweite Planetenzahnräder (36) und ein zweites Sonnenzahnrad besitzt, wobei das erste Sonnenzahnrad (54) im Betriebszustand den zweiten Ring (26) antreibt und die zweiten Planetenzahnräder (36) im Betriebszustand durch den Antrieb (12) angetrieben werden.

11. Übertragungs-Einrichtung nach Anspruch 9 oder 10, **dadurch gekennzeichnet, daß** das erste epizyklische Zahnrad-Getriebe (14) so angeordnet ist, daß es annähernd zwei Drittel der dem Antrieb zugeführten Energie überträgt, und daß das zweite epizyklische Zahnrad-Getriebe (16) so angeordnet ist, daß es die zwei Drittel der Energie des ersten Zahnrad-Getriebes (14) mit dem restlichen Drittel der Antriebsenergie kombiniert.

## Revendications

1. Transmission (10) à utiliser dans la génération d'énergie à partir d'une turbine entraînée par fluide, la transmission (10) incluant une entrée (12) et une sortie (20) et un train d'engrenages (14, 16) entre l'entrée et la sortie permettant d'augmenter la vitesse de rotation de la sortie par rapport à l'entrée, le train d'engrenages (14, 16) incluant une pluralité d'engrenages (24, 34, 54, 26, 36, 56) permettant de transmettre un couple de l'entrée (12) à la sortie (20), la transmission incluant également un organe généralement statique (44) mis en prise avec un ou plusieurs engrenages dudit train d'engrenages entre l'entrée et la sortie pour fournir une réaction de couple de train d'engrenages élastique unique, dans laquelle la transmission inclut en outre un support élastique, (60 ,62, 64) pour l'organe statique (44) afin de fournir une rotation élastique limitée dudit organe statique (44) autour d'un axe d'organe statique, **caractérisée en ce que** le support élastique inclut un organe de torsion allongé (60) pour une torsion élastique autour d'un axe de torsion.

2. Transmission selon la revendication 1, dans laquelle l'entrée (12) est rotative autour d'un axe d'entrée, l'axe d'organe statique et l'axe d'entrée étant sensiblement coaxiaux.

3. Transmission selon la revendication 1 ou 2, dans laquelle l'organe de torsion (60) comporte deux extrémités et un premier bras (64) arrimé à, et adjacent à, une extrémité de l'organe de torsion (60), le premier bras (64) s'étendant généralement radialement en éloignement de l'axe de torsion et dans laquelle la transmission inclut en outre une première attache (62), couplant l'organe statique (44) au niveau d'une première région espacée de l'axe d'organe, au premier bras (64), pour transmettre la réaction de couple entre l'organe statique (44) et l'organe de torsion (60) pour provoquer ladite torsion dudit organe de torsion (60).

4. Transmission selon la revendication 3, dans laquelle un second bras (64) est disposé adjacent à l'autre extrémité de l'organe de torsion (60), et une seconde attache (62) est prévue couplant l'organe statique (44), en une seconde région espacée de l'axe d'organe et opposée à la première région, au second bras pour transmettre également un couple à l'organe de torsion dans un sens opposé au couple transmis par la première attache.

5. Transmission selon la revendication 3 ou 4, dans laquelle l'axe de torsion est sensiblement perpendiculaire à l'axe d'organe statique, mais en est espacé.

6. Transmission selon l'une quelconque des revendications précédentes, dans laquelle la transmission inclut une couverture (22) qui est attachée à l'organe statique (44) et supporte au moins une partie du poids de la transmission (10).

7. Transmission selon l'une quelconque des revendications précédentes, dans laquelle le train d'engrenages inclut au moins un train d'engrenages épicycliques (14) formant un premier trajet de couple et comportant un premier anneau (24), des premiers engrenages planétaires (34) et une première roue solaire (54) et l'organe généralement statique (44) inclut un porteur des premiers engrenages planétaires (34).

8. Transmission selon la revendication 7, dans laquelle le premier anneau (24) est directement raccordé à l'entrée (12), pour entraîner les premiers engrenages planétaires (34), et les premiers engrenages planétaires (34) sont agencés pour entraîner la première roue solaire (54).

9. Transmission selon la revendication 7 ou 8, dans laquelle le train d'engrenages inclut un second train d'engrenages épicycliques (16) combinant l'énergie provenant du premier trajet de couple et provenant d'un second trajet de couple, les premier et second trajets partageant le couple provenant de l'entrée, seul le premier train d'engrenages (14) comportant l'organe généralement statique (44).

10. Transmission selon la revendication 9, dans laquelle le second train d'engrenages épicycliques (16) comporte un second anneau (26), des seconds engrenages planétaires (36) et une seconde roue solaire, la première roue solaire (54) entraînant le second anneau (26) en utilisation, et les seconds engrenages planétaires (36) étant entraînés par l'entrée (12) en utilisation.

11. Transmission selon la revendication 9 ou 10, dans laquelle le premier train d'engrenages épicycliques (14) est agencé pour transmettre approximativement deux tiers de l'énergie délivrée à l'entrée et le second train d'engrenages épicycliques (16) est agencé pour combiner les deux tiers de l'énergie provenant du premier train d'engrenages (14) avec le tiers restant de l'énergie d'entrée.
